(19) Europäisches Patentamt
European Patent Office
Office européen des brevets

(11) **EP 1 743 738 B1**

(12) **EUROPÄISCHE PATENTSCHRIFT**

(45) Veröffentlichungstag und Bekanntmachung des Hinweises auf die Patenterteilung:
**31.10.2007  Patentblatt 2007/44**

(51) Int Cl.:
***B24B 49/16*** *(2006.01)*

(21) Anmeldenummer: **05015013.5**

(22) Anmeldetag: **11.07.2005**

(54) **Regelung des Anpressdrucks in einer Werkzeugmaschine**

Adjustment of the working pressure for a machine tool

Réglage de la pression de travail pour une machine outil

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**17.01.2007  Patentblatt 2007/03**

(73) Patentinhaber: **Puhla, Harald**
**86916 Kaufering (DE)**

(72) Erfinder:
• **Mühlbauer, Adolf**
**93437 Furth im Wald (DE)**

• **Puhla, Wolfgang**
**86937 Scheuring (DE)**

(74) Vertreter: **Lehmann, Horst Michael**
**Giselastrasse 28**
**80802 München (DE)**

(56) Entgegenhaltungen:
**DE-A- 1 803 742        DE-A1- 2 224 459**
**DE-A1- 2 517 001       US-A- 3 665 493**
**US-A- 3 789 279        US-A- 4 091 698**
**US-A- 4 193 227        US-A- 4 386 305**
**US-A- 4 478 009**

**Beschreibung**

Die Erfindung betrifft eine Werkzeugmaschine zur Bearbeitung eines Werkstückes, gemäß dem Oberbegriff des Anspruchs 1; eine derartige Maschine wird in der DE-A-1803742 offenbart.

Bei den Werkzeugmaschinen des Stands der Technik wurde die Position des Werkzeugs senkrecht zur Oberfläche des Werkstücks konstant beibehalten. Beispielsweise ist das Werkzeug einem gewissen Abrieb unterworfen, so dass der Anpressdruck bei konstant gehaltenem Abstand im Lauf der Zeit abnehmen würde. Als Folge davon schwankt der Anpressdruck des Werkzeugkopfes an das Werkstück, und die Werkstückoberfläche wird nicht gleichmäßig bearbeitet.

Daneben sind Steuerungen für Werkzeugmaschinen bekannt, bei denen zuerst die zeitliche Abnützung des Werkzeugs ermittelt wird, wobei die Steuerung das Werkzeug dann entsprechend diesen empirischen Werten immer näher an das zu bearbeitende Material heranführt.

Daneben werden insbesondere in der Steinbearbeitung rotierende Schleif- und Polierwerkzeuge eingesetzt, die aus einem Metallkern bestehen, der von einer elastischen Ummantelung (z.B. Gummi) umgeben ist. Auf der Oberfläche dieser elastischen Ummantelung ist dann das eigentliche Schleifmittel angebracht. Mittels der elastischen Zwischenschicht kann der Anpressdruck über eine gewisse Zeit hinweg konstant gehalten werden. Allerdings unterliegen Werkzeuge dieser Bauart einem starken Verschleiß.

Die deutsche Offenlegungsschrift DT 25 17 001 A1 beschreibt ein Verfahren und eine Vorrichtung zur Regelung des Vorschubs einer Schleifscheibe, insbesondere von einer Trennschleifmaschine. Die Trennschleifscheibe wird bei Trennschleifmaschinen zunächst im Eilgang bis dicht an das zu trennende Werkstück herangefahren und trennt dieses anschließend mit dem vorgewählten Vorschub. Nach Beendigung des Trennvorgangs wird die Schleifscheibe wieder im Eilgang in die Ausgangslage zurückgefahren. Das den Vorschub der Schleifscheibe bewirkende Stellorgan wird während des Schleifvorganges in Abhängigkeit von der Stromaufnahme des Schleifscheibenmotors so gesteuert, dass die Stromaufnahme annähernd konstant bleibt.

US Patent 4,193,227 beschreibt ein Verfahren und Vorrichtung zur Steuerung des Vorschubs einer Schleifmaschine. Die Schleifsteuerung erfasst die Andruckkraft zwischen einer Schleifscheibe und einem Werkstück, um den Vorschub beim Schleifen eines Werkstücks mit unterschiedlichen Schleifbarkeitseigenschaften zu steuern. Auf einen Anstieg der erfassten Kraft hin wird der Vorschub verstärkt, bis die Andruckkraft einen vorgegebenen Wert erreicht, wohingegen bei einer Verringerung der erfassten Kraft die Andruckkraft auf ein vorgegebenes Niveau verringert wird.

US Patent 4,386,305 beschreibt eine Motorantriebssteuerung für eine Werkzeugmaschine mit Antriebs- und Vorschubmotoren. Der Antriebsmotor rotiert während einer Materialbearbeitung mit konstanter Geschwindigkeit. Wenn der Antriebsmotor einer Überlast ausgesetzt ist, verringert sich als Folge davon die Geschwindigkeit. Dies wird von einem Detektor erfasst, der den Ankerstrom des Antriebsmotors überwacht. Falls der Überlastzustand für eine vordefinierte Zeitspanne andauert, wird der Vorschubmotor auf eine vorgegebene Geschwindigkeit verlangsamt. Falls trotz der Verlangsamung des Vorschubmotors wegen der fortdauernden Überlast ein erhöhter Ankerstrom detektiert wird, wird der Antriebsmotor gestoppt.

US Patent 3,789,279 beschreibt eine Vorschubsteuerung für Schneidemaschinen. Ein Servosystem regelt die Leistung eines Vorschubmotors, der die Relativbewegung zwischen dem Schneidwerkzeug und dem Werkstück erzeugt. Durch Verwendung des Servosystems wird eine gewünschte Last auf den Antriebsmotor aufrechterhalten. Am Eingang des Servosystems liegt ein Lastsignal an, das zu dem Laststrom durch den Antriebsmotor proportional ist. Dieses Lastsignal wird durch Addieren der Signale von Stromwandlern in den Versorgungsleitungen des Antriebsmotors erzeugt. Falls das Lastsignal einen vorbestimmten Schwellwert übersteigt, wird der Vorschubmotor umgepolt und das Servosystem wird auf volle Geschwindigkeit gesetzt. Sobald der Überlastzustand überwunden ist, wird der Vorschubmotor wieder auf Vorwärtsbewegung geschaltet. Um sicherzustellen, dass der Vorschub in das Werkstück langsam erfolgt, wird das Servosystem für eine bestimmte Zeitspanne auf einen niedrigen Wert gesetzt.

US Patent 4,091,698 beschreibt eine Steuerung für ein rotierendes Schneidblatt, welche den Vorschub automatisch so steuert, dass ein konstanter Materialabtrag erhalten wird. Das System ermittelt den Strom in einem elektrischen Motor, der das Schneidblatt antreibt, und passt die Vorschubrate automatisch so an, dass der Motorstrom konstant gehalten wird. Die Steuerung steuert ein hydraulisches Ventil in dem für die Bewegung des Schneidblattlagers zuständigen hydraulischen System, um das Schneidblatt hinein oder heraus zu bewegen, wenn der Strom von einem vom Benutzer vorgegebenen Standard abweicht.

Die deutsche Offenlegungsschrift P 18 02 742.8 beschreibt ein Verfahren zur selbsttätigen Vorschubsteuerung von Werkzeugmaschinen. Zur optimalen selbsttätigen Schnitttiefenregulierung wird außer der Bewegung des Werkzeuges in Richtung verminderter Zustellung bei Überschreiten eines oberen Schwellwertes auch eine Zustellung jeweils solange vorgenommen, wie die von der Verformungsleistung abhängige Größe einen unteren Schwellwert unterschreitet. Die Strategie zur Bearbeitung eines Werkstückes ist darauf gerichtet, ein zu großes Moment durch eine Abnahme der Schnitttiefe zu verringern; d.h. der Fräser muss in Richtung +Y ein Stück aus dem Werkstück herausgezogen werden. Falls umgekehrt beim Vorschub in Richtung +X ein zu kleines Moment auftritt, muss die Schnitttiefe vergrößert, d.h. der Fräser F in Richtung -Y verfahren werden.

US Patent 3,665,493 beschreibt eine adaptive numerische Steuerung für eine Werkzeugmaschine. Während der Weg eines Fräsers in Bezug auf ein Werkstück von einer konventionellen numerischen Steuerung anhand vorab gespeicherter Informationen kontrolliert wird, werden die Vorschubgeschwindigkeit des Fräsers entlang seines Weges und die Rotationsgeschwindigkeit des Fräsers durch ein adaptives System gesteuert. Das System erzeugt eine Regelschleife für den gegenwärtigen Fräsvorgang durch Erfassen des Drehmoments und der Vibration des Fräsers. Maximum- und Minimumwerte von Drehmoment, Vibration, Spindeldrehzahl und Vorschubgeschwindigkeit sowie Variable, die von diesen Faktoren abgeleitet sein können, werden dem System vorher vorgegeben. Die adaptive Steuerung optimiert die Spindeldrehzahl und die Vorschubgeschwindigkeit, ohne irgendeine dieser Beschränkungen zu verletzen.

Es ist daher Aufgabe der Erfindung, die Nachregelung des Anpressdrucks eines Werkzeugs an ein Werkstück zu verbessern.

Eine erfindungsgemäße Werkzeugmaschine zur Bearbeitung eines Werkstücks umfasst ein Werkzeug zur Bearbeitung des Werkstücks, eine Positioniervorrichtung, mit der das Werkzeug relativ zum Werkstück positionierbar ist, einen Messwertaufnehmer zum Erfassen eines Messwerts einer für den Anpressdruck des Werkzeugs an das Werkstück repräsentativen Größe, sowie eine Regeleinheit, welche Steuerbefehle für die Positioniervorrichtung erzeugt. Die Regeleinheit umfasst eine Vergleichseinheit, welche den Messwert der für den Anpressdruck des Werkzeugs an das Werkstück repräsentativen Größe mit einem unteren Grenzwert und mit einem oberen Grenzwert eines Sollwertbereichs vergleicht. Des Weiteren umfasst die Regeleinheit eine Bestimmungseinheit, welche für den Fall, dass der Messwert den unteren Grenzwert des Sollwertbereichs unterschreitet, eine neue Position des Werkzeugs relativ zum Werkstück dergestalt bestimmt, dass das Werkzeug zum Werkstück hin bewegt und der Anpressdruck erhöht wird, und welche für den Fall, dass der Messwert den oberen Grenzwert des Sollwertbereichs überschreitet, eine neue Position des Werkzeugs relativ zum Werkstück dergestalt bestimmt, dass das Werkzeug vom Werkstück weg bewegt und der Anpressdruck verringert wird.

Die Werkzeugmaschine umfasst eine Eingabeeinheit zur Eingabe des unteren Grenzwerts des Sollwertbereichs durch den Benutzer. Die Regeleinheit ist dazu ausgelegt, den oberen Grenzwert des Sollwertbereichs aus dem unteren Grenzwert abzuleiten.

Durch den unteren Grenzwert und den oberen Grenzwert wird ein Sollwertbereich für die für den Anpressdruck charakteristische Messgröße festgelegt. Dadurch wird auch für den Anpressdruck selbst ein Toleranzbereich festgelegt, innerhalb dessen sich der Anpressdruck bewegen kann, ohne dass es zu einer Nachregelung der Position des Werkzeugkopfes relativ zum Werkstück kommt. Erst wenn der Anpressdruck so groß wird, dass die für den Anpressdruck repräsentative Messgröße den vorgegebenen oberen Grenzwert überschreitet, oder wenn der Anpressdruck so gering wird, dass die Messgröße unterhalb des unteren Grenzwerts des Sollwertbereichs liegt, kommt es zu einer Nachregelung der Werkzeugposition. So lange sich die für den Anpressdruck repräsentative Messgröße innerhalb des vorgegebenen Sollwertbereichs bewegt, wird die Position des Werkzeugs relativ zum Werkstück unverändert beibehalten.

Würde man den Anpressdruck bzw. die für den Anpressdruck charakteristische Messgröße in Bezug auf einen bestimmten Sollwert nachregeln, dann müsste ständig nachgeregelt werden, und die Position des Werkzeugs relativ zum Werkstück würde sich ständig verändern. Dies wäre nachteilig für die mechanische Stabilität bei der Werkstückbearbeitung. Im Extremfall könnte es sogar zu einem Vibrieren des Werkzeugkopfes kommen. Demgegenüber ermöglicht das erfindungsgemäße Regelverfahren, bei dem die Werkzeugposition nur dann nachgeregelt wird, wenn der Anpressdruck einen vorgegebenen Toleranzbereich verlässt, ein höheres Maß an mechanischer Stabilität, denn so lange sich der Anpressdruck im Toleranzbereich bewegt, wird überhaupt nicht nachgeregelt. Dadurch kann die Nachführung der Werkzeugposition auf das notwendige Maß beschränkt werden. Durch die verbesserte Stabilität können bessere Bearbeitungsergebnisse erzielt werden.

Mit Hilfe der erfindungsgemäßen Anpressdruckregelung kann der Anpressdruck innerhalb des Sollwertfensters gehalten werden. Bei allmählicher Abnutzung des Werkzeugs wird die Position des Werkzeugs zum Werkstück so nachgeregelt, dass sich der Anpressdruck stets im Bereich der vorgegebenen Sollwerte bewegt. Dadurch wird die Haltbarkeit der Werkzeuge verlängert. Da der Anpressdruck stets im Idealbereich gehalten wird, lässt sich mittels der erfindungsgemäßen Andruckregelung ein optimales Bearbeitungsergebnis erzielen.

Durch geeignete Auswahl eines unteren Grenzwerts und eines oberen Grenzwerts für die für den Anpressdruck repräsentative Messgröße kann sowohl die Höhe des Anpressdrucks als auch die Breite des Toleranzbereichs für den Anpressdruck festgelegt werden. Je höher die Genauigkeitsanforderungen für das bearbeitete Werkstück sind, desto kleiner wird der Toleranzbereichs gewählt. Umgekehrt kann bei relativ geringen Genauigkeitsanforderungen der Toleranzbereich dementsprechend größer gewählt werden. Durch geeignete Wahl des unteren und oberen Grenzwerts kann die Regelung auf das jeweils verwendete Werkzeug eingestellt werden.

Gemäß einer vorteilhaften Ausführungsform der Erfindung wird die Regelung des Anpressdrucks eines Werkzeugs an ein Werkstück gestartet, sobald die Drehzahl des Werkzeugs eine vorgegebene Leerlaufdrehzahl erreicht hat. Zunächst wird die Drehzahl des Werkzeugs hochgefahren, wobei das Regelverfahren während des Hochfahrens inaktiv ist. Anschließend wird das Nachregelverfahren aktiviert; das rotierende Werkzeug wird zum Werkstück bewegt, bis der Anpressdruck im vorgegebenen Bereich liegt.

Entsprechend einer weiteren vorteilhaften Ausführungsform der Erfindung wird ein für den Anpressdruck repräsentativer Messwert in regelmäßigen Zeitabständen erfasst und ausgewertet, um dann die notwendige Nachregelung der Position des Werkzeugs zu veranlassen. Auf diese Weise kann eine stetige Nachführung des Anpressdrucks erzielt werden. Es hat sich bewährt, den für den Anpressdruck repräsentativen Messwert beispielsweise alle 20 μsek zu erfassen.

Gemäß einer vorteilhaften Ausführungsform handelt es sich bei der für den Anpressdruck repräsentativen Größe um den von dem Werkzeug aufgenommenen Strom. Je stärker das rotierende Werkzeug an die Oberfläche des Werkstücks angepresst wird, umso mehr Leistung wird vom Werkzeug verbraucht, und entsprechend steigt der vom Werkzeug aufgenommene Strom. Umgekehrt sinkt bei geringem Anpressdruck auch die Stromaufnahme des rotierenden Werkzeugs. Der vom Werkzeug aufgenommene Strom eignet sich daher als Indikator für den Anpressdruck.

Gemäß einer vorteilhaften Ausführungsform der Erfindung handelt es sich bei dem Werkzeug um ein rotierendes Schleif- oder Polierwerkzeug.

Gemäß einer alternativen vorteilhaften Ausführungsform der Erfindung handelt es sich bei der für den Anpressdruck repräsentativen Größe um die Drehzahl des Werkzeugs. Alternativ zu dem vom rotierenden Werkzeug aufgenommenen Strom kann auch die Drehzahl des Werkzeugs zur Regelung des Anpressdrucks verwendet werden: Je stärker das rotierende Werkzeug an das Werkstück gepresst wird, desto stärker verringert sich die Drehzahl des rotierenden Werkzeugs. Daher kann die Drehzahl des Werkzeugs als Ausgangspunkt für die Nachregelung des Anpressdrucks verwendet werden.

Entsprechend einer weiteren vorteilhaften Ausführungsform der Erfindung wird der Bahnverlauf des Werkzeugs in Abhängigkeit von der neuen Position nach jeder Repositionierung des Werkzeugs neu bestimmt. Bei Anwendung des erfindungsgemäßen Regelverfahrens wird die Position des rotierenden Werkzeugs relativ zur Oberfläche des Werkstücks so nachgeführt, dass der Anpressdruck innerhalb des Sollwertbereichs liegt. Insbesondere bei gekrümmtem Verlauf der Werkstückoberfläche muss daher die Bearbeitungsbahn, die vom rotierenden Werkzeug abgefahren wird, an die jeweilige neue Position des Werkzeugs angepasst werden. Dadurch kommt es zu einer dynamischen Anpassung der Bahn des Werkzeugs.

Entsprechend einer weiteren vorteilhaften Ausführungsform umfasst die Regelung einen zusätzlichen Schritt, bei dem der aktuelle Messwert mit einem Höchstwert eines erlaubten Betriebsbereichs verglichen wird, wobei bei Überschreitung des Höchstwerts die Regelung des Anpressdrucks abgeschaltet wird. Diese Maßnahme dient zum Schutz des rotierenden Werkzeugs. Wenn der Anpressdruck zu hoch wird und der aktuelle Messwert den Höchstwert überschreitet, wird die Regelung des Anpressdrucks ausgeschaltet. Je nach Ausführung schaltet sich die Werkzeugmaschine daraufhin sofort ab, um weitergehende Schäden zu vermeiden. Entsprechend einer weiteren vorteilhaften Ausführungsform wird der aktuelle Messwert mit einem Mindestwert eines erlaubten Betriebsbereichs verglichen, wobei bei Unterschreiten des Mindestwerts die Regelung des Anpressdrucks abgeschaltet wird. Ein zu geringer Messwert des Anpressdrucks könnte unter Umständen darauf hindeuten, dass der Messwert der für den Anpressdruck repräsentativen Größe fehlerhaft erfasst wird, weil beispielsweise ein Messwertaufnehmer defekt ist. Auch hier können durch Abschalten der Maschine weitergehende Schäden vermieden werden.

Entsprechend einer vorteilhaften Ausführungsform der Erfindung bewegt sich der Anpressdruck innerhalb eines Anpressdruckbereichs, der durch den Sollwertbereich vorgegeben ist. Der Bereich gewünschter Anpressdrucke wird dabei durch den unteren und den oberen Grenzwert des Sollwertbereichs festgelegt.

Entsprechend einer weiteren vorteilhaften Ausführungsform der Erfindung wird die Werkzeugmaschine zur Bearbeitung von Werkstücken aus Naturstein eingesetzt. Bei der Bearbeitung von Werkstücken aus Naturstein, beispielsweise aus Marmor oder Granit für den Küchen-, Bad- oder Sanitärbereich kommt es insbesondere auf die Erzielung einer glatten Oberfläche an. Hierzu wird die Steinoberfläche zunächst mit Fräswerkzeugen bearbeitet, und anschließend wird die Steinoberfläche nacheinander mit Schleif- und Polierscheiben verschiedener Körnung bearbeitet.

Die vorliegende Erfindung eignet sich insbesondere für die Bearbeitung einer Steinoberfläche mit Schleif- und Polierwerkzeugen. Zunächst können beispielsweise die Untergrenze und die Obergrenze des Anpressdrucks auf das jeweilige Bearbeitungswerkzeug so eingestellt werden, dass der gewünschte Anpressdruck erhalten wird. Dadurch lässt sich während des gesamten Bearbeitungsvorgangs ein optimaler Anpressdruck gewährleisten. Dabei wird die Abnutzung des Werkzeugs automatisch berücksichtigt, denn wenn das Werkzeug sich abnutzt, sinkt der Anpressdruck, und infolge dessen wird das Werkzeug näher an das Werkstück herangefahren. Der Abrieb des Werkzeugs kann dadurch vollständig ausgeglichen werden.

Gegenüber den im Stand der Technik verwendeten Schleifwerkzeugen mit Gummiüberzug lässt sich eine sehr viel bessere Stabilisierung des Anpressdrucks erzielen. Infolge des annähernd konstant gehaltenen Anpressdrucks verlängert sich die Lebensdauer der Schleif- und Polierwerkzeuge deutlich. Darüber hinaus lassen sich mit dem erfindungsgemäßen Verfahren deutlich verbesserte Bearbeitungsergebnisse erzielen. Auch größere Steinoberflächen lassen sich in automatisierter Weise sehr glatt polieren.

Darüber hinaus ist aber hervorzuheben, dass das erfindungsgemäße Regelverfahren nicht auf den Bereich der Steinbearbeitung beschränkt ist, sondern sich zur Bearbeitung beliebiger Materialien eignet.

Gemäß einer vorteilhaften Ausführungsform ist die Steuereinheit dazu ausgelegt, Steuerbefehle für die Neupositionierung des Werkzeugs an der bestimmten Position zu erzeugen. Diese Steuerbefehle werden von der Steuereinheit an die entsprechenden Vortriebselemente für die verschiedenen Koordinatenrichtungen weitergeleitet.

Gemäß einer vorteilhaften Ausführungsform der Erfindung handelt es sich bei der Werkzeugmaschine um eine speicherprogrammierbare CNC-Maschine. Bei speicherprogrammierbaren Werkzeugmaschinen lässt sich der Bewegungsablauf eines Werkzeugs relativ zum Werkstück und insbesondere die Bahn des Werkzeugs frei programmieren. Darüber hinaus lässt sich eine Sequenz von Bearbeitungsschritten festlegen, die von der CNC-Maschine dann selbsttätig nacheinander ausgeführt werden. Je nach Typ der Werkzeugmaschine können unter Umständen auch die verwendeten Bearbeitungswerkzeuge im Laufe der Bearbeitung in vordefinierter Weise ausgewechselt werden. Im Ergebnis lässt sich mit Hilfe einer CNC-Werkzeugmaschine eine vollautomatische Bearbeitung von Werkstücken realisieren.

Nachfolgend wird die Erfindung anhand mehrerer in der Zeichnung dargestellter Ausführungsbeispiele weiter beschrieben. Es zeigen:

    Fig. 1 eine Darstellung einer speicherprogrammierbaren Werkzeugmaschine;

    Fig. 2 eine Darstellung eines rotierenden Werkzeugs während der Bearbeitung der Oberfläche eines Werkstücks;

    Fig. 3 eine schematische Darstellung der erfindungsgemäßen Regelung des Anpressdrucks des Werkzeugs an das Werkstück; und

    Fig. 4 den zeitlichen Verlauf des vom Werkzeug aufgenommenen Stroms bei Einsatz des erfindungsgemäßen Regelverfahrens.

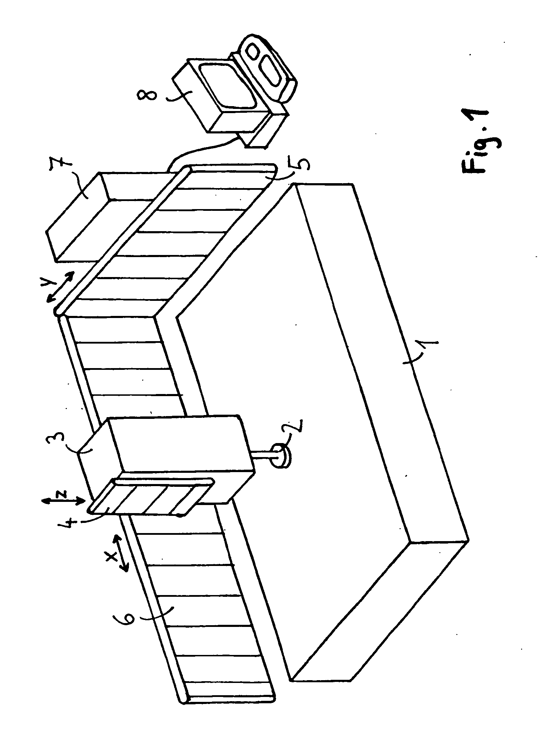

Fig. 1 zeigt eine CNC (Computer Numerical Control)-Brückenanlage zur computergesteuerten Bearbeitung von Werkstücken. Hierzu wird das jeweilige Werkstück auf einem Maschinentisch 1 ortsfest fixiert. Anschließend kann das Werkstück mit Hilfe eines relativ zum Werkstück verfahrbaren Werkzeugs 2 bearbeitet werden. Bei dem Werkzeug 2 kann es sich beispielsweise um ein rotierendes Schleif- oder Polierwerkzeug handeln, welches durch eine Antriebseinheit 3 angetrieben wird. Darüber hinaus umfasst die CNC-Brückenanlage eine Positioniervorrichtung, mit der die Antriebseinheit 3 in x-, y- und z-Richtung relativ zum Werkstück bewegt werden kann. Mittels des Vortriebselements 4 wird die Antriebseinheit 3 in z-Richtung bewegt. Die Positionierung des Werkzeugs in x- und y-Richtung erfolgt mittels der Vortriebselemente 5 und 6. Bei den Vortriebselementen 4, 5, 6 der Werkzeugmaschine kann es sich beispielsweise um Spindelantriebe handeln, die jeweils durch einen Schrittmotor angetrieben werden. Bei derartigen Vortriebselementen lässt sich die Werkzeugposition mit einer Schrittweite von beispielsweise 15 μm einstellen.

Zur Steuerung des Bearbeitungsablaufs umfasst die CNC-Werkzeugmaschine eine programmierbare Steuereinheit 7, welche über einen Terminal 8 bedient und programmiert werden kann. Die Steuereinheit 7 steuert beispielsweise den Bewegungsablauf des Werkzeugskopfs relativ zum Werkstück, die Drehzahl des Werkzeugskopfs, eventuelle Werkzeugwechsel (falls die jeweilige CNC-Maschine dies vorsieht), etc.

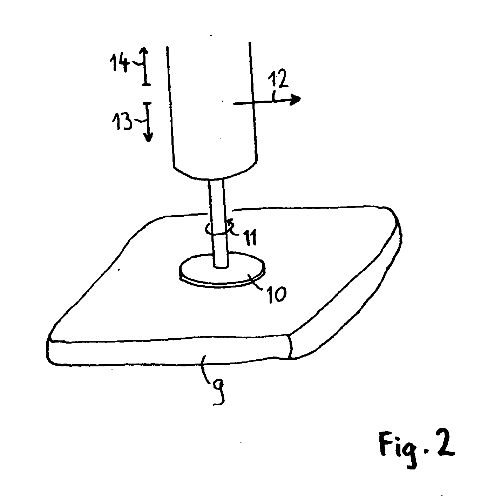

In Fig. 2 ist gezeigt, wie ein Werkstück 9, beispielsweise eine Platte aus Naturstein, durch ein rotierendes Schleif- oder Polierwerkzeug 10 bearbeitet wird. Man unterscheidet hierbei zwischen der Drehbewegung 11 des Werkzeugkopfes, die für den Materialabtrag verantwortlich ist, und der Vorschubbewegung 12, mit der der Werkzeugkopf über die Werkstückoberfläche geführt wird. Der Anpressdruck des Werkzeugs 10 relativ zum Werkstück 9 kann durch Variieren der Werkzeugposition senkrecht zur Oberfläche des Werkstücks verändert werden. Der Anpressdruck steigt, wenn der Werkzeugkopf zum Werkstück hin bewegt wird (13). Entsprechend wird der Anpressdruck abgesenkt, wenn das Werkzeug vom Werkstück weg bewegt wird (14).

Bei der Bearbeitung der Oberflächen von Natursteinen wie beispielsweise Marmor oder Granit wird zunächst mit Hilfe eines Fräswerkzeugs die gewünschte Form aus dem Stein herausgearbeitet. Um eine glatte Steinoberfläche zu erzielen, werden dann einige Schleifstufen sowie abschließend einige Polierstufen durchgeführt. Zum Schleifen der Steinoberfläche können vorzugsweise Schleifwerkzeuge aus Diamant eingesetzt werden. Beispielsweise können vier Schleifstufen durchgeführt werden, wobei nacheinander Schleifwerkzeuge mit Körnungen von 60, 120, 220 und 400 zum Einsatz kommen.

Bei den anschließenden Polierstufen könnte zunächst beispielsweise eine Polierscheibe aus Magnesit- bzw. Keramikmaterial mit 400er-Körnung verwendet werden. Im nächsten Bearbeitungsgang wird eine Polierscheibe mit feinerer Körnung verwendet, beispielsweise eine Magnesit-Polierscheibe mit einer 800er Körnung. Je kleiner die Schleifkörper der Schleifscheibe sind, desto niedriger wird die Drehzahl des Bearbeitungswerkzeugs gewählt. Beispielsweise könnte die Magnesit-Polierscheibe mit einer Drehzahl von 2000 U/min betrieben werden. Zum abschließenden Polieren des Steinwerkstücks kann eine besonders feine Polierscheibe mit 1000er Körnung eingesetzt werden, welche mit einer Drehzahl von 800 U/min betrieben wird.

Bei diesen Schleif- und Polierstufen muss das Werkzeug mit einem bestimmten Anpressdruck an die Steinoberfläche angepresst werden, um eine gleichmäßig glatte Steinoberfläche zu erzielen. Das erfindungsgemäße Verfahren zur Regelung des Anpressdrucks eignet sich insbesondere zur Anwendung bei den Schleif- und Polierstufen in der Steinbearbeitung, kann mit geänderten Parametern aber auch zur Bearbeitung anderer Materialien (z. B. Holz) eingesetzt werden.

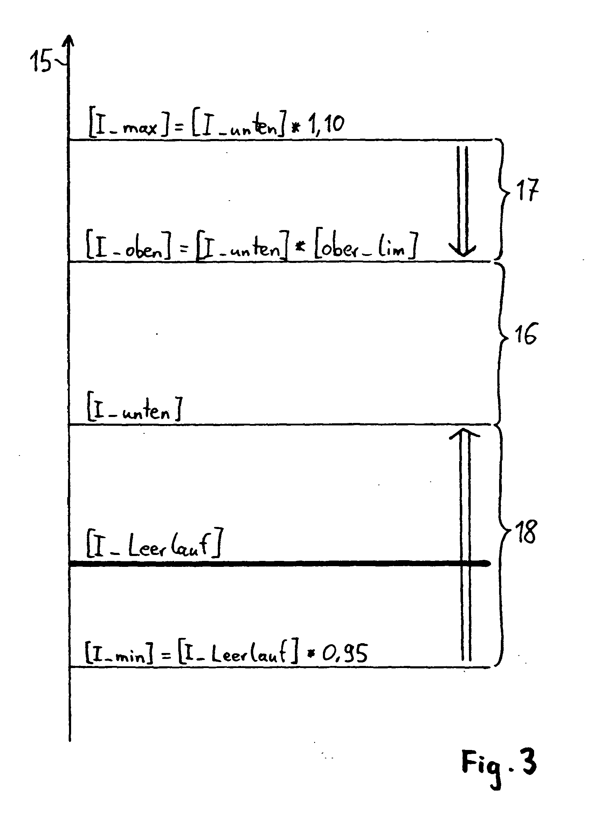

Fig. 3 zeigt einen Überblick über das erfindungsgemäße Regelverfahren zur Regelung des Anpressdrucks des in Fig. 2 gezeigten Werkzeugs 10 an das Werkstück 9. Zur Durchführung der Anpressdruckregelung werden in regelmäßigem zeitlichen Abstand Messwerte einer für den Anpressdruck repräsentativen Messgröße erfasst. Beispielsweise eignet sich der von dem rotierenden Werkzeug aufgenommene Strom als Indikator für den Anpressdruck, denn je stärker der Werkzeugkopf an das Werkstück gepresst wird, umso höher ist die Stromaufnahme des Werkzeugs. Zur Erfassung des aktuell vom rotierenden Werkzeug verbrauchten Stroms umfasst die Werkzeugmaschine einen entsprechenden Messwertaufnehmer, beispielsweise ein digitales Amperemeter.

In Fig. 3 ist der vom rotierenden Werkzeug aufgenommene Strom entlang der Hochachse 15 aufgetragen. Der im unteren Bereich von Fig. 3 eingezeichnete Stromwert [I_Leerlauf] bezeichnet den vom rotierenden Werkzeug bei voller Drehzahl im Leerlauf verbrauchten Strom. Im Leerlauf hat das rotierende Werkzeug noch keinerlei Kontakt mit dem Werkstück, und insofern ist der Anpressdruck gleich Null.

Entsprechend dem erfindungsgemäßen Verfahren zur Regelung des Anpressdrucks wird die Anpressung des Werkzeugs an das Werkstück so eingeregelt, dass sich der vom Werkzeug verbrauchte Strom innerhalb eines vordefinierten Sollwertfensters 16 bewegt. Das Sollwertfenster 16 wird durch einen unteren Grenzwert [I_unten] sowie durch einen oberen Grenzwert [I_oben] festgelegt, wobei der untere Grenzwert [I_unten] eine Untergrenze für den erwünschten Anpressdruck spezifiziert, und wobei der Stromwert [I_oben] den erwünschten Anpressdruck nach oben begrenzt. Der Sollbereich von Anpressdrucken hängt sowohl von der Art des verwendeten Schleif- oder Polierwerkzeugs als auch von der Drehzahl des Werkzeugkopfes ab. Vorzugsweise sollten die Bereichsgrenzen [I_unten], [I_oben] in Abhängigkeit vom Typ und/oder der Drehzahl des verwendeten Werkzeugs festgelegt werden. Beispielsweise können die Grenzen [I_unten], [I_oben] des Sollwertfensters vom Benutzer manuell über einen Eingabeterminal festgelegt werden. Alternativ könnten die Strombereichsgrenzen einer Datei oder Tabelle entnommen werden, welche die Strombereichsgrenzen in Abhängigkeit vom Typ und Drehzahl der verschiedenen Werkzeugköpfe auflistet. Bei der in Fig. 3 gezeigten Ausführungsform der Erfindung wird die Untergrenze [I_unten] des Sollstromintervalls manuell durch den Benutzer festgelegt, woraufhin die Obergrenze [I_oben] des Sollstrombereichs aus der unteren Grenze abgeleitet wird. Zur Ermittlung des Obergrenze [I_oben] wird die Untergrenze [I_unten] mit einem Faktor [ober_lim] multipliziert, der größer als Eins ist:

$$[I\_oben] = [I\_unten] \times [ober\_lim]$$

Der Faktor [ober_lim] kann beispielsweise gleich 1,004 oder gleich 1,02 gewählt werden. Der Faktor [ober_lim] sollte in Abhängigkeit von der erwünschten Toleranz bei der Werkstückbearbeitung gewählt werden, wobei eine hohe Bearbeitungsgenauigkeit durch einen relativ nahe bei Eins liegenden Wert des Faktors [ober_lim] erzwungen wird.

Im Bereich der Steinbearbeitung liegt eine typische Stromaufnahme eines rotierenden Schleif- und Polierwerkzeugs bei einigen Ampere. Der Sollstrombereich kann demgegenüber sehr klein gewählt werden, beispielsweise im Bereich von einigen Milliampere, so dass der Anpressdruck annähernd konstant gehalten wird.

Die Nachregelung des Anpressdrucks des rotierenden Werkzeugs wird durch eine Regeleinheit durchgeführt, welche Befehle zur Nachführung des Werkzeugs an die Vortriebselemente übermittelt. Die Regeleinheit erfasst in regelmäßigen zeitlichen Abständen, beispielsweise alle 20 μsek, den vom rotierenden Werkzeug aufgenommenen Strom und vergleicht den gemessenen Stromwert mit den Bereichsgrenzen [I_unten] und [I_oben]. Solange der gemessene Stromwert innerhalb des Sollwertfensters 16 liegt, erfolgt keine Nachregelung der Position des Werkzeugkopfes relativ zum Werkstück. Während der Oberflächenbearbeitung kann sich der Anpressdruck daher innerhalb der durch [I_unten] und [I_oben] festgelegten Grenzen frei bewegen. Sobald der Anpressdruck zu hoch wird, übersteigt der gemessene Stromwert die obere Stromgrenze [I_oben] und befindet sich dann innerhalb des in Fig. 3 eingezeichneten Bereichs 17. Ursache des zu hohen Anpressdrucks ist, dass sich der Werkstückkopf zu nah an der Werkzeugoberfläche befindet. Daher muss es in diesem Fall Ziel der Regelung sein, den Werkzeugkopf so weit von der Werkstückoberfläche wegzubewegen, bis der verbrauchte Strom wieder innerhalb des Sollwertfensters 16 liegt. Hierzu bestimmt die Regeleinheit die Koordinaten einer neuen Position des Werkzeugs und übermittelt entsprechende Positionierbefehle an die Vortriebselemente der Werkzeugmaschine. Wenn beispielsweise bei der Bearbeitung einer in der x-y-Ebene befindlichen Natursteinplatte der Anpressdruck zu hoch wird, dann wird das Werkzeug mittels des z-Vortriebs von der Oberfläche der Steinplatte weg bewegt, bis der vom Werkzeug aufgenommene Strom wieder innerhalb des Sollwertfensters 16 liegt.

Zur Regelung des Anpressdrucks wird das Werkzeug vorzugsweise senkrecht zur Werkstückoberfläche bewegt. Bei komplizierteren Formen des Werkstücks kann es daher erforderlich sein, verschiedene Vortriebselemente für verschiedene Raumkoordinaten anzusteuern, um das Werkzeug orthogonal zur Werkstückoberfläche zu bewegen. Falls es sich bei der Werkzeugmaschine um eine computergesteuerte CNC-Maschine handelt, kann es erforderlich werden, den programmierten Bahnverlauf des Werkzeugs dynamisch an die neue Position des Werkzeugkopfes anzupassen. Die Befehlssätze einiger CNC-Werkzeugmaschinen umfassen hierzu sogenannte dynamische Operatoren, die eine dynamische Anpassung des Bahnverlaufs an die nachgeregelte Position des Werkzeugkopfes relativ zum Werkstück ermöglichen.

Falls die Regeleinheit feststellt, dass der gemessene Strom innerhalb des Bereichs 18, also unterhalb der Untergrenze [I_unten] des Sollwertfensters 16 liegt, startet die Regeleinheit eine Korrektur, um den Anpressdruck wieder zu erhöhen. Zu diesem Zweck wird das Werkzeug zur Oberfläche des Werkstücks hin bewegt. Die Regeleinheit bestimmt die neue Position des Werkzeugs und erzeugt Positionierbefehle für die Vortriebselemente der Positioniervorrichtung. Als Ergebnis der Repositionierung erhöht sich der Anpressdruck des Werkzeugs, und der vom Werkzeug aufgenommene Strom steigt an, bis er wieder innerhalb des Sollwertfensters 16 liegt.

Durch die oben beschriebene Regelung wird die Position des Werkzeugs relativ zum Werkstück so nachgeführt, dass sich der aufgenommene Strom innerhalb der Grenzen [I_unten] und [I_oben] bewegt. Zum Schutz des Werkzeugs kann darüber hinaus ein erlaubter Betriebsbereich definiert werden, welcher das Sollwertfenster 16 umfasst. In Fig. 3 ist ein erlaubter Betriebsbereich eingezeichnet, der sich von einer Untergrenze [I_min] bis zu einer Obergrenze [I_max] erstreckt. Vorzugsweise wird die Regelung des Anpressdrucks abgeschaltet, wenn der gemessene Stromwert oberhalb der Obergrenze [I_max] liegt, weil der Anpressdruck in diesem Fall zu stark ist. Ebenso wird die Regelung abgeschaltet, wenn der gemessene Strom unterhalb des Minimalstroms [I_min] liegt, weil hier unter Umständen bei der Erfassung des Stromwerts ein Fehler aufgetreten ist. Bei dem in Fig. 3 gezeigten Ausführungsbeispiel wird die Untergrenze [I_min] des erlaubten Betriebsbereichs vom Leerlaufstrom [I_Leerlauf] abgeleitet, indem dieser Leerlaufstrom mit dem Faktor 0,95 multipliziert wird:

$$[\text{I\_min}] = [\text{I\_Leerlauf}] \times 0{,}95.$$

Dagegen wird die obere Grenze [I_max] des erlaubten Betriebsbereichs aus der vom Benutzer eingegebenen unteren Grenze [I_unten] hergeleitet. Hierzu wird dieser untere Grenzwert [I_unten] mit dem Faktor

1,10 multipliziert:

$$[\text{I\_max}] = [\text{I\_unten}] \times 1{,}10.$$

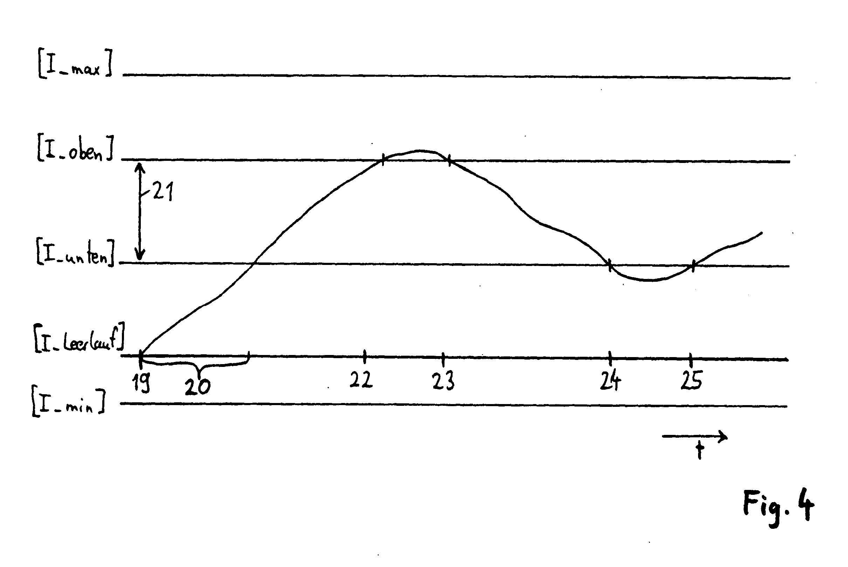

In Fig. 4 ist ein Beispiel für einen Verlauf des vom Werkzeug aufgenommenen Stroms bei Anwendung des erfindungsgemäßen Regelverfahrens dargestellt. Zur Bearbeitung eines Werkstücks wird das Werkzeug entsprechend einer vorbestimmten Bahn lateral zum Werkstück bewegt. Aus dieser Seitwärtsbewegung des rotierenden Werkzeugs resultieren die in Fig. 4 dargestellten zeitlichen Veränderungen des vom Werkzeug aufgenommenen Stroms bzw. des Anpressdrucks, die aus geringfügigen Veränderungen der Relativposition des rotierenden Werkzeugkopfes zur Werkstückoberfläche resultieren. Der vom Werkzeug verbrauchte Strom ist entlang der Hochachse aufgetragen, wobei die anhand von Fig. 3 beschriebenen Stromwerte [I_min], [I_Leerlauf], [I_unten], [I_oben], [I_max] eingezeichnet sind. Die Zeit ist nach rechts aufgetragen.

Zunächst wird die Drehzahl des Werkzeugkopfes im Leerlauf auf eine vorher festgelegte Leerlaufdrehzahl beschleunigt. Wenn die vorher festgelegte Leerlaufdrehzahl erreicht ist, wird vom rotierenden Werkzeug der Leerlaufstrom [I_Leerlauf] verbraucht. Zu diesem Zeitpunkt, der in Fig. 4 als Zeitpunkt 19 eingezeichnet ist, wird das erfindungsgemäße Regelverfahren aktiviert.

Da der Leerlaufstrom [I_Leerlauf] unterhalb der unteren Grenze [I_unten] des Sollwertfensters 16 liegt, wird der Werkzeugkopf im Zeitintervall 20 in Richtung zur Werkstückoberfläche hin bewegt, bis der aufgenommene Strom innerhalb des Sollwertfensters 21 liegt. Solange sich der verbrauchte Strom innerhalb der Grenzen [I_unten] und [I_oben] des Sollwertfensters 21 bewegt, wird die Position des Werkzeugkopfes relativ zum Werkstück nicht verändert; der aufgenommene Strom kann sich frei innerhalb des Sollwertfensters 21 bewegen. Zum Zeitpunkt 22 überschreitet der aufgenommene Strom die obere Grenze [I_oben] des Sollwertbereichs 21. Dies bedeutet, dass der Anpressdruck zu groß geworden ist. Entsprechend dem erfindungsgemäßen Regelverfahren wird das Werkzeug in orthogonaler Richtung so weit von der Oberfläche des Werkstücks weg bewegt, bis der aufgenommene Strom zum Zeitpunkt 23 wieder innerhalb des Sollwertfensters 21 liegt. Ab dem Zeitpunkt 23 bewegt sich der aufgenommene Strom innerhalb des vorgesehenen Sollwertfensters 21. Zum Zeitpunkt 24 wird der gemessene Strom kleiner als die Untergrenze [I_unten] des Sollwertfensters 21, was bedeutet, dass der Anpressdruck zu gering ist. Entsprechend dem erfindungsgemäßen Regelverfahren wird nun das Werkzeug zur Oberfläche des Werkstücks hin bewegt, bis zum Zeitpunkt 25 der gemessene Strom den unteren Grenzwert [I_unten] wieder überschreitet.

Wie aus Fig. 4 erkennbar ist, variiert der Strom bei Anwendung des erfindungsgemäßen Regelverfahrens zwischen den Grenzwerten [I_unten] und [I_oben]. Entsprechend dem in Fig. 4 gezeigten Zeitverhalten des vom Werkzeug aufgenommenen Stroms variiert auch der Anpressdruck in seinem zeitlichen Verlauf zwischen einem Minimalwert und einem Maximalwert.

Es sei jedoch hervorgehoben, dass anstelle der Stromaufnahme des rotierenden Werkzeugs auch jede andere für den Anpressdruck repräsentative Messgröße als Ausgangspunkt für das erfindungsgemäße Regelverfahren verwendet werden kann. Beispielsweise würde sich auch die Drehzahl des rotierenden Werkzeugs als Indikator für den Anpressdruck eignen, weil diese Drehzahl mit zunehmendem Anpressdruck geringer wird. Bei dieser Ausführungsform der Erfindung würde ein durch eine untere Drehzahlgrenze [D_unten] und eine obere Drehzahlgrenze [D_oben] festgelegtes Sollwertfenster als Ausgangspunkt für die Nachregelung des Anpressdrucks verwendet werden.

Das erfindungsgemäße Regelverfahren eignet sich insbesondere für den Einsatz bei der Steinbearbeitung. Allerdings kann das erfindungsgemäße Verfahren auch zur Bearbeitung anderer Materialien herangezogen werden, wobei über die Festlegung des Sollwertfensters eine Anpassung an Werkzeug und Werkstück vorgenommen werden kann.

## Patentansprüche

1. Eine Werkzeugmaschine zur Bearbeitung eines Werkstücks (9), welche aufweist

   - ein Werkzeug (10) zur Bearbeitung des Werkstücks (9),
   - eine Positioniervorrichtung, mit der das Werkzeug (10) relativ zum Werkstück (9) positionierbar ist,
   - einen Messwertaufnehmer zum Erfassen eines Messwerts einer für den Anpressdruck des Werkzeugs (10) an das Werkstück (9) repräsentativen Größe,
   - eine Regeleinheit, welche Steuerbefehle für die Positioniervorrichtung erzeugt, mit

      - einer Vergleichseinheit, welche den Messwert der für den Anpressdruck des Werkzeugs (10) an das Werkstück (9) repräsentativen Größe mit einem unteren Grenzwert und mit einem oberen Grenzwert eines Sollwertbereichs (16, 21) vergleicht,
      - einer Bestimmungseinheit, welche für den Fall, dass der Messwert den unteren Grenzwert des Sollwertbereichs (16, 21) unterschreitet, eine neue Position des Werkzeugs (10) relativ zum Werkstück (9) dergestalt bestimmt, dass das Werkzeug zum Werkstück hin bewegt (13) und der Anpressdruck erhöht wird, und welche für den Fall, dass der Messwert den oberen Grenzwert des Sollwertbereichs (16, 21) überschreitet, eine neue Position des Werkzeugs (10) relativ zum Werkstück (9) dergestalt bestimmt, dass das Werkzeug vom Werkstück weg bewegt (14) und der Anpressdruck verringert wird,

   **dadurch gekennzeichnet, dass**
   - die Werkzeugmaschine eine Eingabeeinheit zur Eingabe des unteren Grenzwerts des Sollwertbereichs durch den Benutzer umfasst, und
   - die Regeleinheit dazu ausgelegt ist, den oberen Grenzwert des Sollwertbereichs aus dem unteren Grenzwert abzuleiten.

2. Werkzeugmaschine nach Anspruch 1, **dadurch gekennzeichnet, dass** die Regeleinheit dazu ausgelegt ist, Steuerbefehle für die Neupositionierung des Werkzeugs an der bestimmten Position zu erzeugen.

3. Werkzeugmaschine nach Anspruch 1 oder Anspruch 2, **dadurch gekennzeichnet, dass** die Regeleinheit dazu ausgelegt ist, nach jeder Repositionierung des Werkzeugs den Bahnverlauf des Werkzeugs in Abhängigkeit von der neuen Position neu zu bestimmen.

4. Werkzeugmaschine nach einem der Ansprüche 1 bis 3, **dadurch gekennzeichnet, dass** der Messwertaufnehmer den von dem Werkzeug aufgenommenen Strom als für den Anpressdruck repräsentative Größe erfasst.

5. Werkzeugmaschine nach einem der Ansprüche 1 bis 4, **dadurch gekennzeichnet, dass** es sich bei dem Werkzeug um ein rotierendes Schleif- oder Polierwerkzeug handelt.

6. Werkzeugmaschine nach einem der Ansprüche 1 bis 5, **dadurch gekennzeichnet, dass** der Messwertaufnehmer die Drehzahl des Werkzeugs als für den Anpressdruck repräsentative Größe erfasst.

7. Werkzeugmaschine nach einem der Ansprüche 1 bis 6, **dadurch gekennzeichnet, dass** der Messwertaufnehmer dazu ausgelegt ist, den für den Anpressdruck repräsentativen Messwert in periodischen zeitlichen Abständen zu erfassen.

8. Werkzeugmaschine nach einem der Ansprüche 1 bis 7, **dadurch gekennzeichnet, dass** es sich bei dem Werkstück um ein Werkstück aus Naturstein handelt.

9. Werkzeugmaschine nach einem der Ansprüche 1 bis 8, **dadurch gekennzeichnet, dass** es sich bei der Werkzeugmaschine um eine speicherprogrammierbare CNC-Maschine handelt.


**Claims**

1.  A machine tool for the processing of a workpiece (9), which comprises

    - a tool (10) for the processing of the workpiece (9),
    - a positioning device with which the tool (10) can be positioned relative to the workpiece (9),
    - a measurement value sensor to register a measurement value of a factor representative for the contact pressure of the tool (10) on the workpiece (9),
    - a control unit which generates control commands for the positioning device with

      - a comparison unit which compares the measurement value of the factor representative for the contact pressure of the tool (10) on the workpiece (9) with a lower limit value and with an upper limit value of a desired value range (16, 21),
      - a determination unit which, in the event that the measurement value falls short of the lower limit value of the desired value range (16, 21), determines a new position of the tool (10) relative to the workpiece (9) in such a way that the tool is moved (13) towards the workpiece and the contact pressure is increased, and which, in the event that the measurement value exceeds the upper limit value of the desired value range (16, 21), determines a new position of the tool (10) relative to the workpiece (9) in such a way that the tool is moved (14) away from the workpiece and the contact pressure is reduced,

      **characterised in that**
      - the machine tool comprises an input unit for the entry of the lower limit value of the desired value range by the user and
      - the control unit is adapted to derive the upper limit value of the desired value range from the lower limit value.

2.  Machine tool according to claim 1, **characterised in that** the control unit is adapted to generate control commands for the repositioning of the tool at the determined position.

3.  Machine tool according to claim 1 or claim 2, **characterised in that** the control unit is adapted to re-determine the path of the tool depending on the new position after every repositioning of the tool.

4.  Machine tool according to any one of claims 1 to 3, **characterised in that** the measurement value sensor registers the current consumed by the tool as the factor representative for the contact pressure.

5.  Machine tool according to any one of claims 1 to 4, **characterised in that** the tool is a rotating grinding or polishing tool.

6.  Machine tool according to any one of claims 1 to 5, **characterised in that** the measurement value sensor registers the speed of the tool as the factor representative for the contact pressure.

7.  Machine tool according to any one of claims 1 to 6, **characterised in that** the measurement value sensor is adapted to register the measurement value representative for the contact pressure at periodic intervals.

8.  Machine tool according to any one of claims 1 to 7, **characterised in that** the workpiece is a workpiece of natural stone.

9.  Machine tool according to any one of claims 1 to 8, **characterised in that** the machine tool is a stored-program CNC machine.


**Revendications**

1.  Machine outil pour usiner une pièce à usiner (9) qui présente

    - un outil (10) pour usiner la pièce à usiner (9),
    - un dispositif de positionnement à l'aide duquel l'outil (10) peut être positionné par rapport à la pièce à usiner (9),
    - un capteur de valeurs de mesure pour saisir une valeur de mesure d'une grandeur représentative de la pression d'application de l'outil (10) contre la pièce à usiner (9),
    - une unité de régulation qui produit des ordres de commande pour le dispositif de positionnement présentant

      - une unité de comparaison qui compare la valeur de mesure de la grandeur représentative de la pression d'application de l'outil (10) contre la pièce à usiner (9) avec une valeur limite inférieure et une valeur limite supérieure d'une plage de valeurs de consigne (16, 21),
      - une unité de détermination qui pour le cas où la valeur de mesure dépasse vers le bas la valeur limite de la plage de valeur de consigne (16, 21) détermine une nouvelle position d'outil (10) par rapport à la pièce à usiner (9) de manière à ce que l'outil se déplace vers la pièce à usiner (13) et que la pression d'application est augmentée et pour le cas où la valeur de mesure dépasse vers le haut la valeur limite de la plage de valeurs de consigne (16, 21) détermine une nouvelle position de l'outil (10) par rapport à la pièce à usiner (9) de manière à ce que l'outil est éloigné de la pièce à usiner (14) et que la pression d'application est diminuée,

**caractérisée en ce que**
- la machine outil comprend une unité d'entrée pour entrer la valeur limite inférieure de la plage de valeurs de consigne par l'utilisateur, et
- l'unité de régulation est conçue pour que la valeur limite supérieure de la plage de valeurs de consigne est dérivée à partir de la valeur limite inférieure.

2. Machine outil selon la revendication 1, **caractérisée en ce que** l'unité de régulation est conçue pour produire des ordres de commande pour le repositionnement de l'outil à la position déterminée.

3. Machine outil selon les revendications 1 ou 2, **caractérisée en ce que** l'unité de régulation est conçue pour redéterminer après chaque repositionnement de l'outil la trajectoire de l'outil en fonction du nouveau positionnement.

4. Machine outil selon l'une quelconque des revendications 1 à 3, **caractérisée en ce que** le capteur de valeurs de mesure saisit le courant absorbé par l'outil comme grandeur représentative de la pression d'application.

5. Machine outil selon l'une quelconque des revendications 1 à 4, **caractérisée en ce que** l'outil est un outil rotatif de ponçage ou de polissage.

6. Machine outil selon l'une quelconque des revendications 1 à 5, **caractérisée en ce que** le capteur de valeurs de mesure saisit le régime de l'outil comme grandeur représentative de la pression d'application.

7. Machine outil selon l'une quelconque des revendications 1 à 6, **caractérisée en ce que** le capteur de valeurs de mesure est conçu pour saisir la valeur de mesure représentative de la pression d'application à intervalles périodiques dans le temps.

8. Machine outil selon l'une quelconque des revendications 1 à 7, **caractérisée en ce que** la pièce à usiner est une pièce à usiner en pierre naturelle.

9. Machine outil selon l'une quelconque des revendications 1 à 8, **caractérisée en ce que** la machine outil est une machine CNC à mémoire programmable.

Fig. 1

EP 1 743 738 B1

Fig. 2

$[I\_max] = [I\_unten] * 1,10$

$[I\_oben] = [I\_unten] * [ober\_lim]$

17

$[I\_unten]$

16

$[I\_Leerlauf]$

18

$[I\_min] = [I\_Leerlauf] * 0,95$

15

Fig. 3

Fig. 4

**EP 1 743 738 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1803742 A
- DE DT2517001 A1
- US 4193227 A
- US 4386305 A
- US 3789279 A
- US 4091698 A
- DE P1802742
- US 3665493 A